# EUROPEAN PATENT APPLICATION

(11) **EP 4 778 433 A1**
(43) Date of publication of application: **22.07.2026**
(21) Application number: 26152300.5
(22) Date of filing: 16.01.2026
(51) Int. Cl.: A47J 43/044, A47J 43/07

(54) **PROFESSIONAL PLANETARY MIXERS FIXABLE TO A WALL**

(30) Priority: 16.01.2025 IT 202500000711
(71) Applicant: Sigma S.r.l., 25030 Torbole Casaglia, Brescia (IT)
(72) Inventor: GNOCCHI, Andrea, 25088 Toscolano Maderno (BS) (IT)
(74) Representative: Autuori & Partners S.R.L.

(57) **Abstract**

A professional planetary mixer for processing a food product such as a cake dough or the like, the machine being designed to be positioned in an environment which comprises a base floor **(F)** and a wall **(P).** The machine comprises a support structure **(30),** a container **(200)** designed to house the food product to be processed and a tool **(100)** designed to act on the food product to process it, and drive means **(10)** and a motion transmission shaft **(11)** defining a first axis **(X)** designed to be operatively connected with the tool **(100)** to move it. The drive means **(10)** and the motion transmission shaft **(11)** are coupled with the support structure **(30)** so that the latter supports the former. The container **(200)** and the tool **(100)** being suitable to be operatively coupled with the support structure **(30)** so that the latter supports the former. The drive means **(10)** and the motion transmission shaft **(11)** are configured to promote the planetary motion of the tool **(100)** with respect to the axis **(X).** The container **(200)** has a capacity at least equal to 5 litres. The machine comprises means **(90)** for allowing to fix the support structure **(30)** to the wall **(P)** so that, once fixed, the machine has a lower face **(51)** facing towards and spaced apart from the floor **(F)** and a rear face **(52)** facing towards the wall **(P).**

## Description

### Technical field

The present invention generally relates to the technical field of food production machines for processing food products, for example for whipping, mixing, emulsifying, kneading, cutting or similar food products, and it particularly relates to a professional planetary mixer.

### State of the Art

In the pastry-making, pizza-making, culinary, bread baking and artisanal food workshop industry there is known the use of food production machines, such as mixers for preparing semi-processed products. An example of such machine is a mixer for processes such as whipping, mixing, emulsifying and kneading various types of products such as whipped cream, egg white, stuffed meat products, Olivier salad, shortcrust pastry, cake doughs. Such list is provided by way of non-limiting example.

Such prior art mixers do not allow an excellent ergonomics for the operator during use.

Furthermore such planetary mixers have large overall dimensions, even due to the need to counteract the motion, and therefore they occupy a lot of space on the workbench. Such aspect is particularly disadvantageous in a narrow space such as that of a kitchen or an artisanal food workshop.

A further disadvantage of the prior art planetary mixers lies in complicating the operations for cleaning the work space and in not allowing an easy movement thereof.

A further disadvantage of the prior art planetary mixers lies in significantly complicating the use thereof in particular food production spaces in motion, such as kitchens of ships or aeroplanes.

### Summary of the invention

An object of the present invention is to at least partly overcome the drawbacks illustrated above by providing a planetary mixer that is highly efficient and cost-effective.

Another object of the present invention is to provide an ergonomic planetary mixer.

Another object of the present invention is to provide a planetary mixer that can be used in kitchens in ships or aeroplanes.

Another object of the present invention is to provide a planetary mixer that allows an easy cleaning of the space in which it is used.

Another object of the present invention is to provide a planetary mixer that can be used in narrow spaces.

These and other objects which will be more apparent hereinafter, are attained by a planetary mixer as described, illustrated and/or claimed herein.

The dependent claims define advantageous embodiments of the invention.

The mixer for processing a food product such as a cake dough or the like may be designed to be placed in a space which comprises a base floor and a wall, preferably vertical. In particular, the machine may comprise a support structure, a container designed to house the food product to be processed, a tool designed to act on the food product to process it and drive means and a motion transmission shaft - defining a first axis - designed to be operatively connected with the tool to move it. The drive means and the motion transmission shaft may be coupled with the support structure so that the latter supports the former. The container and the tool may be suitable to be operatively coupled with the support structure so that the latter supports the former.

Suitably, the machine may have a container of at least 5 litres. Furthermore, the drive means and the motion transmission shaft may be configured to promote the planetary motion of the tool with respect to the main axis.

Furthermore, the machine may advantageously comprise means for allowing to fix the support structure to the wall so that, once fixed, the machine has a lower face facing towards and spaced apart from the floor and a rear face facing towards the wall.

Furthermore, during use, the machine may be fixed to the wall therefore preventing the machine from moving making it suitable for use in kitchens in ships, aeroplanes or the like.

Advantageously, the machine may be fixed to the wall at any height depending on the preferences of the operator so as to be ergonomic.

Furthermore, the fixing of the machine spaced from the floor allows to facilitate the cleaning operations under the same and there are no residues of the dough stuck.

Preferably, the fixing may therefore be of the removable type.

Thanks to such characteristics, the machine may be fixed to the wall during use and it may be removed from the wall so as to be kept away, for example in a warehouse, when not in use. Therefore, the machine may be used in narrow spaces.

Preferably, the machine may be fixed so that the main axis may have a distance from the wall of at least 30 cm.

This characteristic may allow to use large containers.

Preferably, the machine may comprise means for supporting and/or locking the container during use. This may allow to prevent the high stresses of the planetary motion from moving the container laterally or frontally, and at the same time the container may be supported, that is the vertical movement may be prevented.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
**FIG. 1** is an axonometric view of a mixer **1**;
**FIG. 2A** is a different axonometric view of the machine **1,** with **FIG. 2B** showing an enlarged view of some details of FIG. 2A;
**FIG. 3** and **FIG. 4** are axonometric views of some details of the machine **1;**
**FIG. 5A** is a cross-sectional view of the machine **1,** with **FIG. 5B** showing some enlarged details of FIG. 5A;
**FIG. 6** is a schematic view of the machine **1** in which there is shown the support structure **10;**
**FIG. 7** and **FIG. 8** are axonometric views of the machine **1** in which there is shown a fixing plate **80;**
**FIG. 9, FIG. 10, FIG. 11** and **FIG. 12** are schematic views of different steps for anchoring the support structure **30** to the fixing plate **80,** with **FIG. 10A** and **FIG. 10B** showing some enlargements of FIG. 10, **FIG. 11A** and **FIG. 11B** showing some enlargements of FIG. 11, and **FIG. 12A** and **FIG. 12B** showing some enlargements of FIG. 12;
**FIG. 13A** and **FIG. 13B** showing schematic views for assembling the machine **1** to a wall;
**FIG. 14, FIG. 15 and FIG. 16** are an axonometric view of a different embodiment of the machine **1** respectively in the form of a meat mincer, vegetable mincer and meat mincer.

### Detailed description of some preferred embodiments

With reference to the attached figures, herein described is a food production machine **1.** Such machine may generally be used with a tool **100** and a container **200.**

Depending on the type of tool **100** and/or container **200,** the machine **1** may be suitable for different processing operations and/or for processing different food products.

The machine **1** may be a dough mixer. The tool **100** may be a whisk **101.** The container **200** may be a bowl **201.**

In this case, the machine **1** may allow to carry out works such as whipping, mixing, emulsifying and kneading, while the food products which can be processed may be of different types, for example, whipped cream, egg white, stuffed meat products, Olivier salad, shortcrust pastry, soft cake doughs.

The tool **100** may have an axial rotary or eccentric rotary motion, that is revolutionary. Preferably, the machine **1** may be configured so that the tool **100** combines both movements, that is so that it has a planetary motion.

The machine **1** may preferably be a professional machine. The machine **1** may be a planetary mixer according to the UNI EN:454 standard. The machine according to such standard are professional planetary mixers.

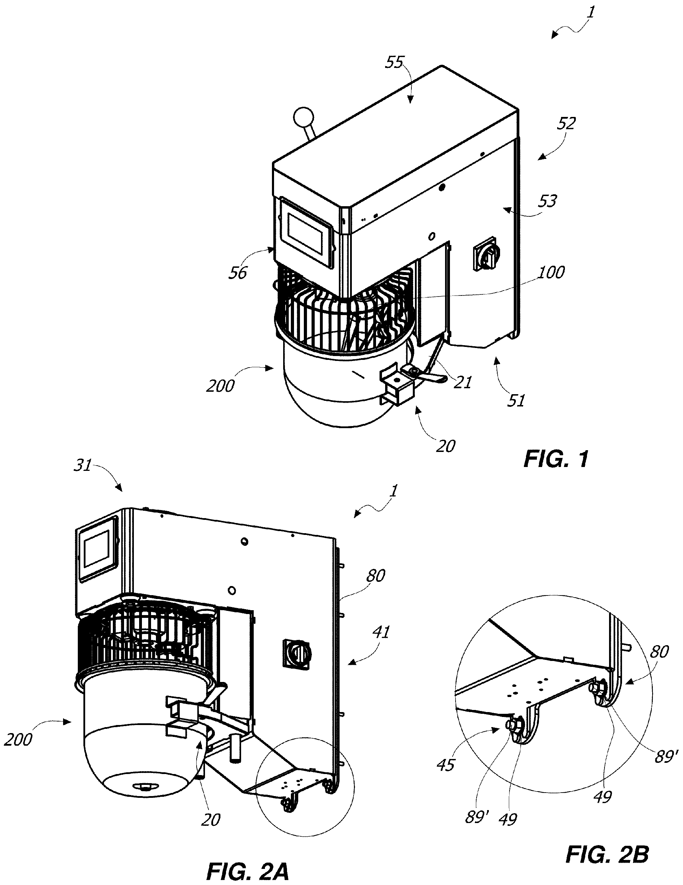

An example of such professional planetary mixer **1** is shown in FIG. 1. Such machine comprises the accessory **100** in the form of a whisk **101** and the container **200** in the form of a bowl **201.** The bowl **201** may have a capacity of at least 5 l. Preferably, the bowl **201** may have a capacity comprised between 5 l and 40 l.

It is clear that both the tool **100** and the container **200** may be of the food grade type, that is suitable for contact with food.

Essentially, as better explained below, the machine **1** may be configured so as to be fixed to a wall **P.** Preferably, such wall **P** may be vertical or substantially vertical.

In greater detail, the machine **1** may be placed in a work environment with a floor **F** and a wall **P.** The machine **1** may be fixed to the wall **P** so as to remain spaced from the floor **F.**

Given that the machine **1** may be spaced from the floor **F ,** there may be allowed an easy cleaning of the work space. Furthermore, as better explained below, the machine **1** may be placed at a distance from the any floor **F,** allowing the operator to place the machine **1** at a preferred distance so that it is ergonomic.

Given that the machine **1** is fixed to the wall, it may have small overall dimensions in the work space and, furthermore, there will be no need to occupy the workbench. Furthermore, thanks to the fixing of the machine **1,** the latter may be used in unstable spaces, such as kitchens in ships, submarines, aeroplanes or the like.

The machine **1** may essentially comprise a drive means **10.** The drive means **10** may define a rotation axis **X‴** . For example, the drive means **10** may comprise an electric motor **10',** the latter may define the axis **X‴.**

Suitably, the machine **1** may comprise a motion transmission shaft **11.** The shaft **11** may be suitable to be operatively coupled with the drive means **10** so that the latter promote the rotation of the shaft **11,** in a per se known manner. The shaft **11** may define a respective axis **X.**

Preferably, the axis **X‴** of the motor **10'** and the axis **X** of the shaft **11** may be substantially parallel to each other. The motion may be transmitted from the former to the latter through a drive belt **15** of the per se known type.

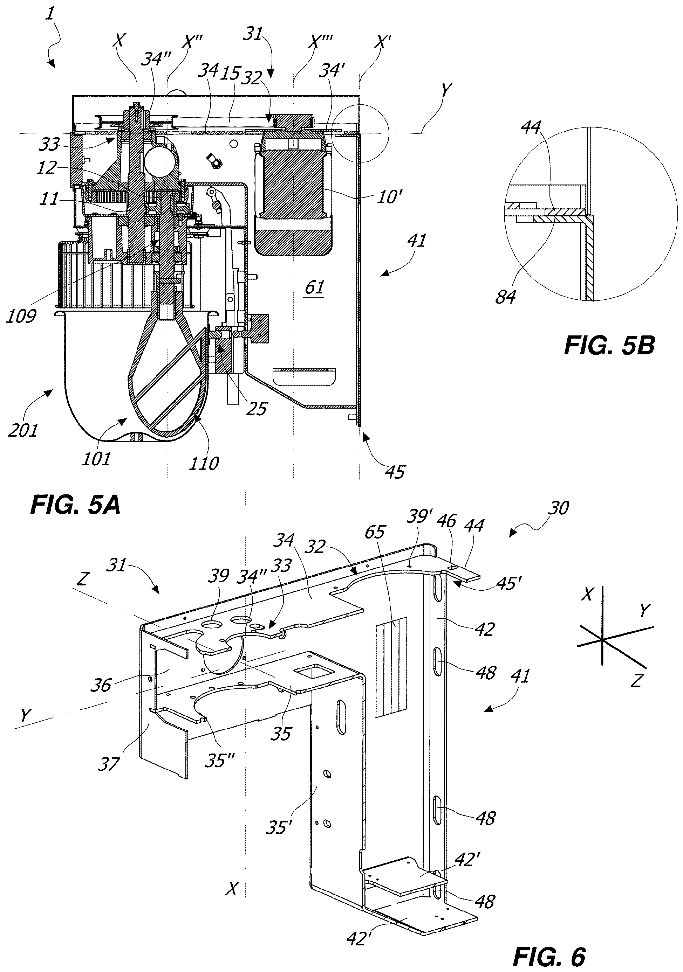

Such configuration, for example as shown in FIG. 5A, allows to reduce the overall dimensions and provide a compact machine **1.**

However, it is clear that such configuration is not exclusive. For example, the motor **10'** and the shaft **11** may be coaxial. Possibly, the shaft **11** may be the drive shaft of the motor **10'.**

The tool **100** may be connected with the shaft **11** so that the latter drives the former. In greater detail, the tool **100** may be connected with the shaft **11** by means of a connection assembly of the per se known type. Such connection assembly may comprise motion transmission belts, gears, pulleys and/or similar systems of the per se known type.

For example, the connection assembly may comprise a seat **12** for housing the tool **100** in an integrally joined fashion. In other words, the tool **100** may be removably fixed in the seat **12** so that the movement of the latter corresponds to the movement of the tool **100.**

For example, the tool **100** may comprise an operating end **109** designed to be fixed in the seat **12.** The whisk **101** may comprise the end **109** which can be fixed in the seat **12,** preferably removably, and an opposite end **110** comprising the multiple wires.

The seat **12** may define a respective axis **X".**

Preferably, the seat **12** may be connected with the shaft **11 so** that the seat **12** rotates with respect to the axis **X"** thereof e and so that its axis **X"** rotates around the axis **X,** therefore defining a planetary rotary movement. Such embodiment is for example shown in FIG. 5A. Such operative connection may be obtained by a connection assembly of the per se known type as described above. As a matter of fact, it is clear that such motion transmissions may be obtained through connection assemblies between the shaft **11** and the seats **12** or the tools **100** of the known type.

In any case, preferably, the axis **X** of the shaft **11** may be in use substantially parallel to the wall **P.** In other words, the axis **X** may be in use substantially vertical. For example, as shown in FIG. 5A, the axis **X** of the shaft **11,** the axis **X"** of the seat **12** and the axis **X‴** of the motor **10'** may all be substantially parallel to each other.

The axis **X** may be spaced apart from the wall **P.** In this manner, the accessory **100** and/or the container **200** may be positioned so as to facilitate the processing for the operator. Furthermore, this may allow to use containers **200** or accessories **100** with large overall dimensions. The container **200** may for example be a bowl **201** measuring at least 5 litres, preferably a bowl **201** measuring 10 litres, measuring 20 litres or measuring 30 litres.

Suitably, the axis **X** may have a distance from the wall measuring at least 30cm, preferably at least 40 cm. In this manner, the machine **1** may house large containers **200** and allow the introduction and removal thereof easily.

Suitably, upon fixing the machine **1** to the wall, the motor **10'** may be interposed between the shaft **11** and the wall **P.** For example, the distance between the axis **X** and the axis **X‴** may measure at least 25cm. For example, the distance between such axes **X** and **X‴** may be comprised between 25 and 35 cm. For example, the distance may be about 28cm or about 33cm.

The large distance between the axis **X** and the wall **P** is advantageous in terms of overall dimensions both given that it allows to house large accessories/container and given that it allows to place the motor between the shaft **11** and the wall **P.**

However, the large distance of the rotation axis **X** with respect to the wall **P** involves large rotation stresses when using the machine. Such problem is advantageously solved using the fixing means **90** described below.

The machine **1** may comprise means **20** for holding in position the container **200** during use, that is for locking it in use. Such aspect is particularly significant given that the planetary motion generates high intensity radial stresses, that is along directions perpendicular or transversal to the axis **X.** The means **20** may therefore have the both the locking function and the support function.

The means **20** may comprise a pair of arms **21** designed to support the container **200.** The arms **21** may extend from the lower area of the machine **1** so as to support the container **200** both vertically and laterally. This allows to effectively counteract the stresses in the radial, that is lateral, direction.

Preferably, this allows to prevent the lateral movement in the plane **π5**. The plane **π5** may be spaced apart from the seat **12** of the tool **100.** This may allow to prevent the rotation of the container and this may ensure the locking thereof during use, as better explained below.

Furthermore, the container **200** may have a pair of seats **210** on opposite sides to house the arms **21.** The arm **21** may comprise a longitudinal element **22** with rectangular cross-section, while the seats **210** may be rectangular-shaped too. The longitudinal element **22** may be inserted into the seat **210.** The seats **210** may be in use in the plane **π5**.

Due to such configuration, the arms **21** on opposite sides may prevent the lateral movement of the container and the upwards and downwards displacement thereof.

The seats **210** may be at the outer surface of the bowl **200.** The seats **210** may be about half the bowl **200** and therefore the plane **π5**.

The arms **21** may be at the operative part of the tool. For example, should the tool be a whisk **101,** the arms may be at the multiple wires of the whisk. In this manner, the arms **21** may be at the maximum stresses.

The means **20** may comprise a locking element **25** which may prevent the forwards and backwards movement. Such locking element **25** may be arranged between the container and the structure **30** for example as shown in FIG. 5A.

Furthermore, the configuration mentioned above may allow to prevent the container **200** from rotating with respect to the plane perpendicular to the axis **X,** that is this may allow to prevent the container from tilting during use.

It is clear that the means **20** may have different configurations with respect to those described above and shown in the attached figures.

Advantageously, the means **20** may be configured so as to allow to introduce/remove the container **200** into/from an operative position in which the accessory **100** can interact with the contents of the container **200.**

Preferably, the means **20** may be configured so as to allow the introduction/the removal through displacement along an axis parallel to the axis **Y.** As a matter of fact, this may firstly allow to move the container **200** parallel to the axis **Y** to disengage the container **200** and the means **20,** and the container may be subsequently moved along a direction substantially parallel to the axis **X.** Should the machine **1** be fixed to a vertical wall **P,** the container **200** may be firstly moved away from the wall **P** horizontally (along the axis **Y**) and subsequently lowered vertically (along the axis **X**).

Therefore, this characteristic may allow to insert the container **200** (that is operatively couple the latter with the machine) and remove the container **200** without removing the accessory **100.**

Advantageously, such operation may allow to quicken the operations allowing, for example, to process doughs of subsequent containers without removing the accessory **100.**

Furthermore, this may advantageously allow to move the container **200** without any concern that the accessory **100** might fall or get dirty. For example, the dough may be left to stand in the container or poured without any concern for the accessory **100.**

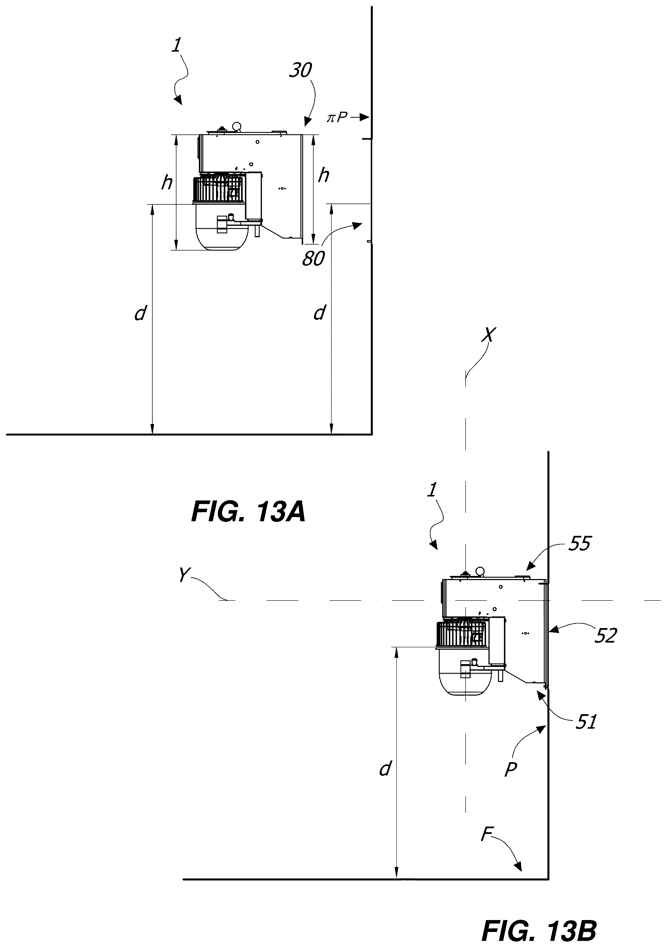

Such operation for introducing and removing the container **200** is particularly simple and easy for the operator given that the machine **1** is fixed to the vertical wall and it therefore has vacant space beneath it, unlike what happens in the machines placed on a flat surface such as a workbench. FIGS. 13A and FIG. 13B schematically show such aspect.

It is clear that the means **20** may have a different configuration depending on the container **200** and/or the accessory **100.** For example, the means **20** may comprise bayonet couplings, fastening screws or other similar systems.

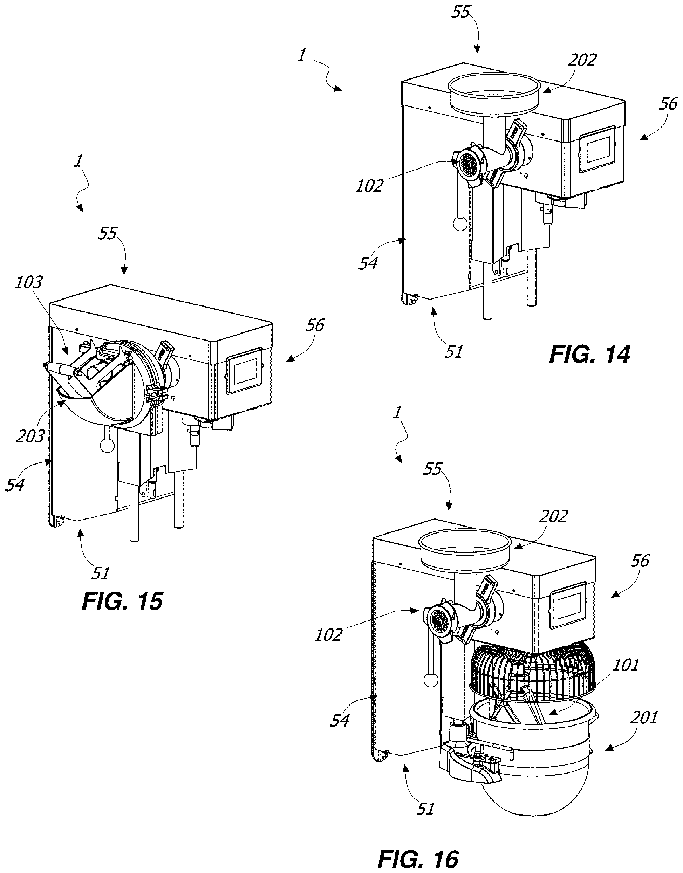

According to a different embodiment, the food production machine **1** may be configured to carry out processing operations of different type with respect to that of a planetary mixer or not exclusively the function of a planetary mixer. For example, FIG. 14 shows a machine **1** in the form of a meat mincer. In this case, the tool **100** may be a mincer **102** and the container **200** may be a collection bowl **202** with a guide groove for the meat towards the mincer **102.** On the other hand, FIG. 15 shows a machine **1** in the form of a vegetable shredder. In this case, the tool **100** may be shredder **103** and the container **200** may be a work bowl **203** which houses the shredder **103.**

The seat **12** and the shaft **11** may be connected in a different manner depending on the accessories **100** so that the latter rotate around horizontal and/or vertical axes.

Possibly, the axis **X"** of the seat **12** may be oriented in a different manner with respect to the axis **X** of the shaft **11.** For example, FIG. 14 and FIG. 15 the axis **X"** is substantially parallel or coincident to an axis **Z,** the latter perpendicular to the axis **X** and to the axis **Y.** In such case, the tool **100** may rotate around the axis **Z.**

Furthermore, the seat **12** may move in a non-planetary fashion. For example, it may rotate only around its axis **X",** rotary movement, or it may rotate only around the axis **X,** that is a revolutionary movement. For example, in the machines shown in FIG. 14 and FIG. 15 the seat **12** rotates around its axis **X".**

Possibly, the machine **1** may comprise more than one tool **100,** for example as shown in FIG. 16. In such case, there may be provided for a plurality of seats **12,** each with its axis **X"** having a different extension. FIG. 16 shows a meat mincer **102** rotating along the axis **Z** and a whisk **101** rotating around the axis **X** in a planetary fashion, as described above.

Suitably, the planetary mixer **1** may comprise means **90** so as to allow the fixing thereof to the wall **P.**

The machine **1** may have a lower face **51** and an upper face **55,** preferably substantially parallel to each other. The machine **1** may also have a rear face **52** and a front face **56,** preferably substantially parallel to each other. Suitably, the machine **1** may further comprise a pair of opposite lateral faces **53, 54** preferably substantially parallel to each other, and substantially perpendicular to the lower **51** and rear faces **52.**

The upper face **52** may define a plane **π1,** the rear face **52** may define a plane **π3** and the lateral faces **53, 54** may define a plane **π2.**

Upon fixing the machine **1** to the wall **P,** the face **51** may be arranged facing towards and spaced apart from the floor **F,** while the face **52** may remain faced to or in contact with the wall **P.**

The wall **P** may be substantially vertical, while the floor **F** may be substantially horizontal. Hereinafter, for the sake of simplicity, the expressions "vertical" and "horizontal" will be used to indicate the machine **1** in use fixed to the vertical wall **P** which may define a plane **πP.** In this case, the axis **X** will be the vertical axis, while the axis **Y** will be the horizontal axis. Such aspects are schematically shown in Fig. 13B.

Suitably, the machine **1** may comprise an internal chamber **61.** The drive means **10** may be arranged in such internal chamber **61.** Preferably, such chamber **61** may have an extension along the axis **X'** of the motor **10.**

Suitably, the opposite lateral faces **53, 54** may comprise an opening **65** at such chamber 61. This may allow the through-flow of air between the internal and the external of the chamber **61.** In other words, the opening **65** may define an air intake for the drive means **10.**

On the other hand, the opening **65** may be placed at the lower part, for example at the lower face **51.** In this case, advantageously, this may allow to prevent the powder from accumulating in the chamber **61.**

Thanks to the lateral positioning of the opening **65,** the rear face **52** may be in contact with or in proximity of the wall **P.** This may allow to ensure aeration and at the same time fix the machine **1** to the wall **P**.

Suitably, the machine **1** may comprise a support structure **30.** Such structure **30** may have a structural function. Preferably, such structure **30** may be rigid.

The drive means **10** and the shaft **11,** and possibly the seat **12,** may all be anchored with the support structure **30** so that the latter supports the former. Furthermore, also the means **20** may be anchored with the support structure **30.**

Suitably, the means **90** may be configured to allow the fixing of the support structure **30** to the wall **P.**

The fixing of the support structure **30** to the wall **P** may be removable. This may advantageously allow to easily fix the structure **30,** and therefore the machine **1,** to the wall **P** so as to use the machine. Furthermore, this may allow to easily remove the machine **1** from the wall **P** when it is not used and put the machine **1** away elsewhere, for example in a shelf.

Such characteristic is advantageous given that it reduces the overall dimensions and it is therefore particularly advantageous when used in kitchens with limited spaces.

Preferably, the support structure **30** may be fixed to the wall **P** so that the axis **X** of the shaft **11** is substantially parallel to the wall **P** .

The support structure **30** may have a portion **31** which may be configured to support the shaft **11.** In greater detail, the portion **31** may comprise an area **33** for supporting the shaft **11.**

Possibly, the portion **31** may comprise an area **32** for supporting the drive assembly **10.**

The portion **31** may have an extension along an axis **Y.** Preferably, the latter may remain substantially perpendicular to the axis **X**.

The portion **31** may comprise a planar element **34.** The planar element **34** may have an extension along the axis **Y.**

Generally, the portion **31** may have a substantially planar extension along a plane **π1.** Such plane **π1,** in use, may remain substantially perpendicular to the plane **πP** of the wall **P**. The planar element **34** may have an extension substantially coplanar to the plane **π1** or, preferably, it may define the plane **π1.**

The upper face **55** may comprise the planar element **34.**

The planar element **34** may comprise a pair of holes **34', 34"** to allow the through-passing through the planar element **34** of the motor **10'** and of the shaft **11.**

Suitably, the motor **10'** and the shaft **11** may be coupled with the planar element **34** in a per se known manner, for example by means of plates and/or screws and bolts.

For example as schematically shown in FIG. 6, the area **33** may comprise the hole **34"** and a plurality of holes **39** for housing a plurality of screws. The shaft **11** may rest against the plate portion peripheral to the hole **34".**

The area **32** may comprise the hole **34'** a plurality of holes **39** for housing a plurality of screws. Preferably, for example as schematically shown in FIG. 6, there may be provided for a plate **38** for fixing the motor **10'** with the area **32** of the planar element **34.**

The drive belt **15** may remain substantially parallel to the planar element **34.**

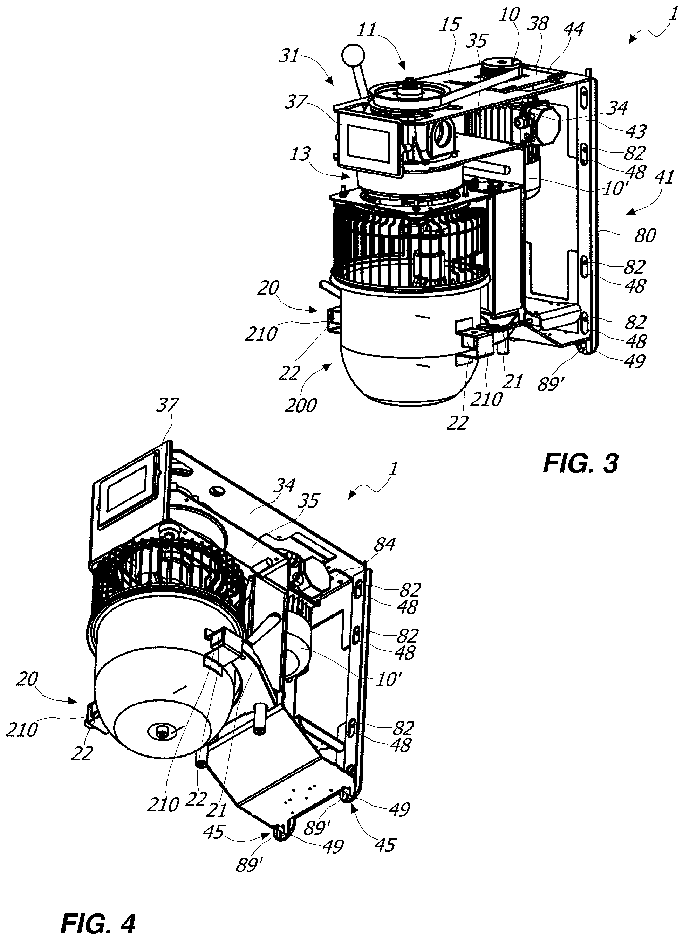

Preferably, for example as shown in FIG. 3 and FIG. 5A, the portion **31** may comprise a pair of planar elements **34, 35** which may remain faced and spaced apart from each other.

Hereinafter, reference will be made to the planar elements **34, 35** in the form of a sheet having a planar extension. It is clear that the planar elements **34** and/or **35** may comprise or consist of plates, tubular elements or other similar structural elements having a substantially planar extension or they may be portions of a shaped element, for example a planar portion of a folded sheet.

The sheet **34** may be upper and the sheet **35** may be lower. Suitably, the sheets **34, 35** may be rigidly connected to each other so as to form a single rigid structure.

To this end, for example there may be provided for vertical connection elements **36** and/or **37** for connecting the sheets **34, 35** to each other.

Such vertical elements may preferably have a planar extension, and even more preferably they may be planar elements similar to the planar elements **34** and/or **35.**

Hereinafter, reference will be made to the planar elements **36, 37** in the form of a sheet having a planar extension. It is clear that the planar elements **36** and/or **37** may comprise or consist of plates, tubular elements or other similar structural elements having a substantially planar extension or they may be portions of a shaped element, for example a planar portion of a folded sheet.

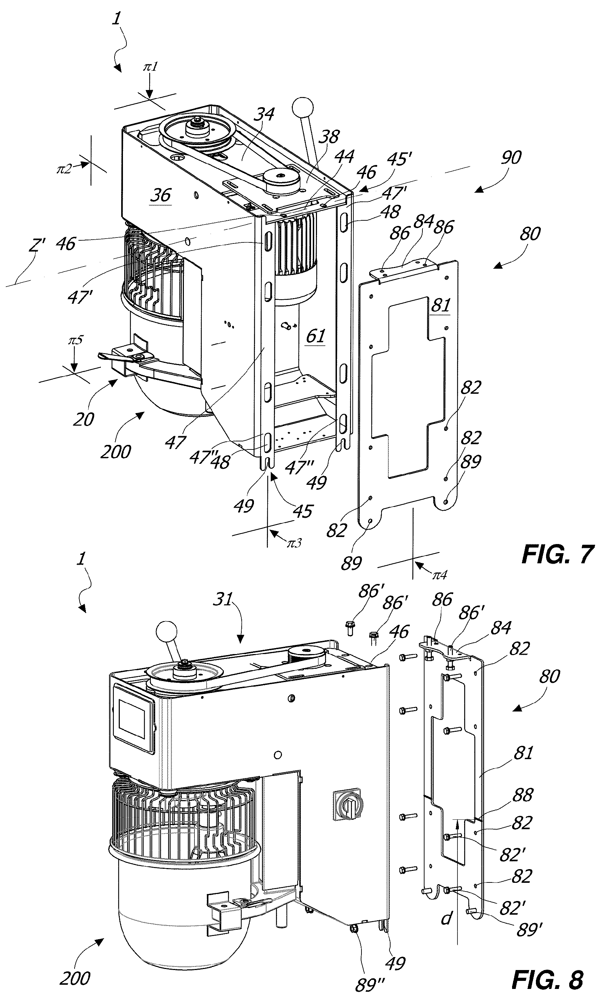

The sheet or the sheets **36** may have an extension substantially perpendicular to the plates **34, 35.** In other words, the sheets **36** may define planes **π2** substantially perpendicular to the plane **π1** and both substantially parallel to the axis **Y,** for example as shown in FIG. 7.

The vertical sheet **37** perpendicular both to the sheet **34** and to the sheet **36** (or to the sheets **36**) may be possibly provided for. Such sheet **37** may rigidly connect the sheets **34** e **35.**

Preferably, the lateral faces **53** and **54** may comprise the vertical sheets **36.** The front face 56 may comprise the sheet **37**

Suitably, also the sheet **35** may comprise a hole **35"** so as to allow the through passing through the sheet **35** of the shaft **11.** Possibly, the sheet **35** may comprise the holes **39** so as to allow the fixing of the shaft **11.**

The sheet **34** and/or the sheet **35** may also support the seat **12** and the connection assembly **13** of the seat **12** with the shaft **11.**

The horizontal sheets **34, 35** and the vertical sheets **36, 37** may define a rigid structure. The portion **31** may comprise such rigid structure with the sheets **34, 35** and **36, 37.**

There may preferably be provided for a single vertical sheet folded so as to form two planar portions respectively defining the sheets **36** and **37.** In this manner, the structure **30** may be provided in a simple and quick manner.

The sheets **34, 35, 36, 37** may define a rigid structure.

The support structure **30** may further comprise a portion **41** extending along an axis which may be a vertical axis in use. Such axis may be the axis **X‴.** In this manner, the portions **31** and **41** may be substantially perpendicular to each other. In this manner, the structure **30** may be substantially L-shaped. As schematically shown in FIG. 5A, the portion **31** may be horizontal, and the portion **41** may be vertical.

As a matter of fact, the L-shaped structure **30** allows to avoid obstacles along the axis **X'** below the container **200** therefore facilitating the operations for coupling/de-coupling the same. In other words, the space below the lower face **51** may remain be vacant.

Furthermore, advantageously, the support structure **30** may have a height **h** substantially equal to the length of the portion **41.** In this manner, the machine **1** may be particularly compact. The height **h** may be defined by the distance between the upper **55** and lower **51** face.

Furthermore, as schematically shown in FIG. 13A and FIG. 13B, the machine **1** with the container **200** may have an overall height substantially equal to the height **h.**

The portion **41** may house the drive means **10.** The portion **41** may comprise or include the chamber **61.** Possibly, the portion **41** may define the chamber **61.**

The portion **41** may comprise means **90** for allowing to fix the structure **30** to the wall **P** and therefore the machine **1** to the wall **P.**

Preferably, as better explained below, the fixing of the structure **30** with the wall **P** may be of the removable type. This may easily allow to fix the machine **1** when needed and remove the machine **1** from the wall **P** when not needed.

The support structure **30** may comprise a pair of longitudinal bars **42, 43.** Preferably, the portion **41** may comprise the longitudinal bars **42, 43.**

Each bar **42, 43** may define an axis **X'.** In use, such axis **X'** may be substantially parallel to the wall **P.** Preferably, the axes **X'** of the bars **42, 43** may define the plane **π3.** In use, the latter may remain substantially parallel to the plane **πP** of the wall **P.** The rear face **52** may comprise the bars **42, 43.**

The means **90** may comprise parts of the bars **42, 43** or the whole bars **42, 43.** The bars **42, 43** may be configured to be fixed with the wall **P,** preferably removably.

According to an embodiment, not shown in the attached figures, the bars **42, 43** may comprise male (for example a hook) or female (for example a through hole or a ring) elements, defining fixing means, designed to be removably engaged with corresponding female or male elements of the wall **P.**

Advantageously, there may be provided for a fixing plate **80.** The fixing means **90** may therefore comprise the plate **80.** The latter may be stably fixed with the wall **P** and it may be removably fixed with the support structure **30.**

Thanks to this characteristic, the operations for fixing to the wall **P** and removing therefrom may be particularly simple and quick. Furthermore, the plate **80,** which remains stably fixed to the wall **P,** may have small overall dimensions in thickness allowing the position thereof even in small kitchens.

The structure **30** may further comprise a connection element **44** having an extension along an axis **Z'** substantially perpendicular to the axes **X'.** For example, the element **44** may be interposed between the bars **42, 43.** Preferably, the element **44** may rigidly connect the bars **42, 43.**

The bars **42, 43** may comprise a lower end **45** and an upper end **45'.** It is clear that the expressions "lower" and "upper" shall be deemed to refer with respect to the vertical when the machine is fixed to the wall **P.** Preferably, the connection element **44** may be arranged at the upper end **45'** of the bars **42, 43.**

The connection element **44** may be a bar or a plate or another element having a similar function. Preferably, the element **44** may be the terminal portion of the sheet **34.** The latter embodiment is schematically shown in FIG. 5A and in FIG. 7.

The plate **80** may define a respective plane **π4.** Upon fixing the plate **80** to the wall **P,** the planes **π4** and **πP** may coincide.

The plate **80** may comprise a planar portion **81** which may define the plane **π4.**

The planar portion **81** may comprise means for stably fixing the plate **80** to the wall. For example, the portion **81** may comprise a plurality of through holes **82.** Suitably, there may be provided for screws **82'** passing through the holes **82** designed to be inserted into the wall **P.**

The plate **80** may comprise a signalling element, for example a notch **88** or a line. The notch **88** may indicate, for example, the position on which the edge of the container **200** is found once inserted into the machine **1.** In other words, as schematically shown in FIG. 13A and FIG. 13B, when the container **200** is coupled with the support structure **30,** the edge of the latter may have a distance **d** from the floor equal to the distance **d** of the notch **88** from the floor.

This may advantageously allow to easily fix the plate **80** to the wall so that the container during use has a height from the floor that is excellent for the operator, that is ergonomic.

The structure **30** may be removably fixed with the plate **80.** Such characteristic allows to stably fix the plate **80** to the wall **P** in the desired position, while the structure **30** may be easily removed from the plate and positioned in another environment, for example in case of disuse.

The fixing plate **80** may comprise a portion **84** extending from the portion **81.** The portion **84** may be an anchoring portion configured to support the structure **30** as better described below.

The portion **84** may be designed to support the element **44.** In other words, as shown in FIG. 5A and FIG. 5B, the end portion **44** of the sheet **34** may rest against the planar portion **84** of the plate **80.**

Thanks to this characteristic, during the fixing step, the operator may rest the structure **30** on the plate **80,** that is the element **44** on the portion **84,** so that the plate **80** supports the weight of the former.

With regard to the weight, the machine **1** may weight in use at least 45kg. Preferably, a weight comprised between 50 kg and 100 kg. The structure **30** and the fixing means **90** may therefore be configured to support such weight.

Possibly, the sheets **35, 35'** and **36** may have a different thickness depending on the weight of the machine. For example, should the machine **1** in use weigh less than 65 kg there may be used sheets measuring 3 mm, while should the machine weigh more than 65 kg there may be used sheets measuring 4 mm. This advantageously allows to confer to entire structure **30** a greater structural strength.

The sheets **36** and/or **34** and/or **35** may have the structural function and the protection guard function.

Suitably, the portion **44** and the portion **84** may be mutually removably fixed, for example by means of screws and bolts. This may allow to prevent inadvertent de-coupling.

The portion **84** may be substantially planar, it may have an extension along a plane perpendicular to the plane **π4** and it may comprise one or more through holes **86.** On the other hand, the portion **44** may also be planar, the axis **Z'** may be substantially parallel to the plane **π4,** and it may comprise corresponding one or more holes **46.**

This may allow to provide one or more screws **86'** passing through the one or more holes **46** and **86** for holding in position the portions **44** and **84** and therefore for keeping the structure **30** anchored with the plate **80.**

In this manner, the vertical load may be discharged by means of the portions **44** and **84.** On the other hand, the fixing by means of screws **86'** allows to prevent the opposite vertical movement of the structure **30** with respect to the plate **80.** In other words, this may allow to prevent the mutual movement of the structure **30** and of the plate **80** with respect to the vertical axis parallel to the plate **80** (for example the axis **X**).

Furthermore, fixing with the screws **86'** or the like into the holes **46** and **86**, allows to prevent the structure from moving away from the plate **80**, that is rotating frontally about a horizontal axis (for example the axis **Z**).

Suitably, the holes **46** and the holes **86** may be at least two and they may be spaced apart along the axis **Z**'. This may allow to prevent the rotation of the structure **30** with respect to a horizontal axis perpendicular to the plate **80** (for example the axis **Y**).

Fixing by means of holes **46, 86** and screws **86'** may further allow to prevent the mutual sliding of the structure **30** and of the plate **80** along a horizontal axis parallel to the plate **80** (for example the axis **Z**) and along a horizontal axis perpendicular to the plate **80** (for example the axis **Y**).

According to a particular aspect of the invention, the bars **42, 43** may all have at least one pair of respective operating surfaces **47', 47".** The latter may be spaced apart along the respective axis **X'.** For example they may be spaced apart by at least 30cm.

The operating surfaces **47', 47"** may be designed to abut against the fixing plate **80** to discharge the stresses thereof.

Thanks to this characteristic, the surfaces 47', 47" of the bar 42 may cooperate with each other to prevent the rotation of the bar 42 about a horizontal axis parallel to the plate 80 (for example the axis Z), and as a result the moving away of one of the surfaces 47', 47" of the plate 80. Similarly, the surfaces **47', 47"** of the bar **43** may cooperate with each other to prevent the rotation of the bar **43** around the axis.

Furthermore, the surfaces **47'** of the bar **42** and **43** may be spaced apart with respect to each other along the axis **Z,** and the surfaces **47"** of the bar **42** and **43** may be spaced apart from each other along the axis **Z,** preferably the bars **42** and **43** and they may be spaced apart along the axis **Z.** For example, the axes **X'** of the bars **42, 43** may have a distance of at least 15cm. Preferably, the axes **X'** of the bars **42, 43** may have a distance of about 17cm or of about 20cm.

Suitably, the surfaces **47'** of the bar **42** and **43** may cooperate with each other to prevent the rotation of the structure **30** around a vertical axis parallel to the plate **80** (for example the axis **X**, and as a result the moving away of one of the bars **42, 43** from the plate **80.** The surfaces **47"** of the bar **42** and **43** may cooperate similarly.

The bars **42, 43** may have a surface **47** designed to abut against the plate **80.** Preferably, the surface **47** may be the entire surface of the bars **42, 43** and it may extend between the ends **45** and **45**'. The distance between the latter may define the length of the bars **42, 43.**

The surface **47** may include the surfaces **47'** and **47".** The bar **42, 43** may have a length of at least 45 cm. For example it may have a length measuring about 52cm or measuring about 60cm. The surfaces **47'** and **47"** may be the end areas of the surface **47.**

The bars **42, 43** may be planar-shaped, as shown in the attached figures, or they may have at least one portion with the planar surface **47.**

The bars **42, 43** may have a plurality of through holes or slots **48.** In greater detail, the surface **47** may have a plurality of through holes or slots **48.**

The slots **48** may be at the holes **82.** Therefore, advantageously, when the plate **80** is fixed by means of screws **82',** the head of the latter may be at the slots **48.** Thanks to this characteristic, the surfaces **47', 47"** or the entire surface **47** may abut against the plate **80.**

Preferably, the structure **30** may be coupled with the plate **80** at the upper part as described above, that is by means of the element **44** and the portion **84,** and at the lower part, as described hereinafter.

The bars **42, 43** may comprise the lower end **45** configured so as to remain accessible to the operator once the structure **30** is supported by the portion **84.** Such lower end **45** may further remain accessible even when the structure **30** is fixed with the plate **80.**

The end **45** may comprise a through slot, hole or seat **49.** The plate **80** may comprise a corresponding hole, slot or seat **89.** This may allow to place a screw **89'** passes through the hole **49** so as to be engaged in the seat **89** (or passing through the hole **89** so as to be engaged in the wall **P**). The screw **89'** may remain always accessible to the operator therefore facilitating the assembly and disassembly operations.

Possibly, as shown in FIG. 8, the plate **80** may comprise a threaded bar **89'** designed to pass through the slot **49** so as to be closed by means of a bolt **89",** in a per se known manner. In this case, the bolt may however still remain accessible by the operator leading to the advantages mentioned above in terms of assembly/disassembly.

Such fixing prevents the moving away and the translation between the slot **49** and the bar **89'.**

In this manner, the fixing of the structure **30** with the plate **80** in two lower fixing points (that is at the slots **49**) and in two upper fixing points (that is at the holes **46**), allows to stably fix the structure **30** and the plate **80** countering any degree of freedom. As a matter of fact, both the upper and lower points are spaced apart from each other along the axis **Z** and the upper and lower points are spaced apart along the axis **X.**

It is clear that the means **90** may comprise the lower fixing points and in particular the means **90** may comprise the slot **49** and the bar **89'** and the bolt **89".**

It is clear that the means **90** may comprise upper fixing points, and in particular the means **90** may comprise the portion **84,** the holes **86** and the screws **86'** and furthermore, preferably also the element **44** and the holes **46.** Generally, the means **90** may comprise all the parts which cooperate to allow the fixing of the structure **30** with the wall **P.** The fixing means **90** may further comprise the surfaces **47'** and **47"** of the bars **42, 43,** or, preferably, the entire surface **47** of the bars **42, 43.**

Preferably, the fixing means **90** may be at the rear face **52** of the machine **1,** that is at the face designed to remain facing or in contact with wall **P.** In other words, such face **52** may comprise the means **90.**

In the present document, there has been described a pair of bars **42** e **43.** Such configuration is particularly simple and cost-effective to manufacture.

There may preferably be provided for a single vertical sheet which may be folded so that a portion defines the bar **42** and the sheet **36** and possibly a part of the sheet **37,** and another single sheet which may be folded so that a portion defines the bar **43** and the sheet **36** and possibly the other part of the sheet **37.** In this manner, the structure **30** may be particularly simple to obtain.

Possibly, as shown in the attached figures, the portion **41** may be stiffened by means of a further vertical planar element **35'.** The latter may be obtained using a single folded sheet so that a section defines the sheet **35** and a section the sheet **35'.**

The sheet **35'** may be arranged facing towards and spaced apart from the bars **42** and **43** with respect to the axis **Y.** Suitably, there may be provided for stiffening elements between the sheet **35'** and the bars **42** and **43** of the known type such as plates **42'** or the like.

It is clear that, although not shown in the attached figures, the structure **30** may comprise a plate or sheet which includes such bars **42** and **43.** For example, there may be provided for a rear plate with a plurality of holes **48** and a pair of protuberances defining the portions **45.**

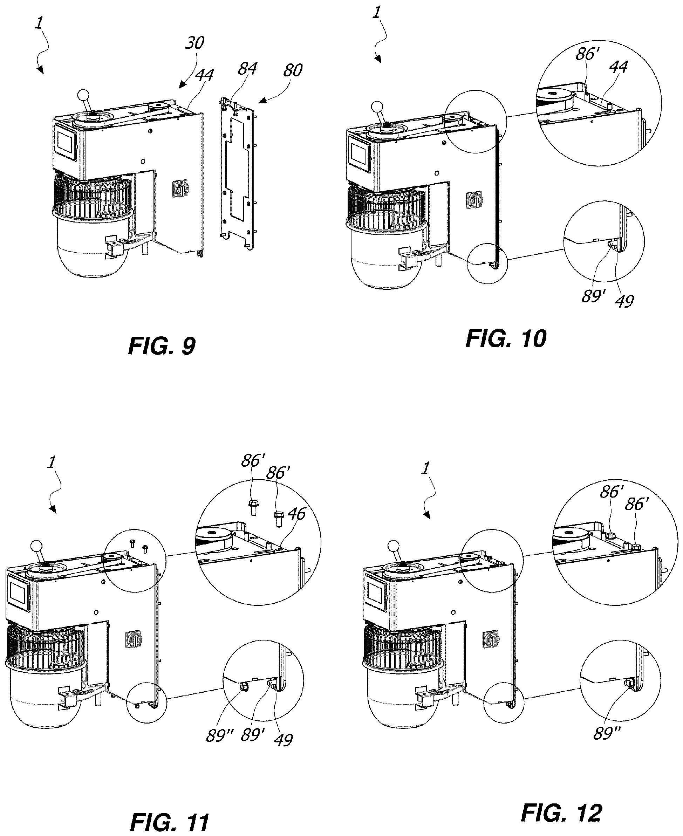

Operatively, there may be firstly provided the fixing plate **80** (FIG. 9). The plate **80** may therefore be fixed to the wall **P** (FIG. 13A). Subsequently, the support structure may be approached **30** to the fixing plate **80** so that the element **44** of the structure **30** rests against the portion **84** of the plate **80** and the bars **89'** are inserted into the slot **49** (FIG. 10). Using the screws **86'** there may be mutually fixed the element **44** and the portion **84,** using the bolts **89"** there may be mutually fixed the bars **89'** and the slots **49** of the bars **42** and **43** (FIG. 11 and FIG. 12).

The operation in the reverse order will allow to disassemble the machine **1,** that is decouple the support structure **30** from the plate **80.** Therefore, the machine **1** may be stored in a warehouse and used subsequently if need be.

It is clear that the machine **1** and the structure **30** may have different sizes and/or weights depending on the function.

For example, the machine **1** with the container **201** may have the following sizes depending on the size of the container **201:**

| | Container **201** measuring 10l | Container **201** measuring 30l |
|---|---|---|
| Weight in use | 58 kg | 86 kg |
| Distance between axes **X‴** and **X** | 276 mm | 239 mm |
| Distance between the axis **X** and the wall **P** | 394 mm | 490 mm |
| Length of the bars **42, 43** | 520 mm | 605 mm |
| Distance between the bars **42, 43** | 170 mm | 200 mm |

The table above shows that increasing the weight and/or the size of the container **201** is necessary to increase both the distance between axes **X‴** and **X** which allows to house the larger container **201,** and the length of the bars and the distance between them which facilitates the opposition to the rotations and therefore it allows to stably fix the machine to the wall.

In the present document, there has been described a machine **1** which comprises a plate **80** such as a separator element designed to be fixed to a substantially flat wall. As a matter of fact, the presence of the plate **80** allows to fix the structure **30** to any flat wall.

However, it is clear that there may be provided for a shaped wall with a portion **84** or a stable structure, for example a shelf, with a portion **84.** In this case, the structure **30** may be fixed to such portion **84** in a manner similar to the one described above. In this case, the wall may integrate the function and the characteristics of the plate **80.**

For example, the machine **1** may be without plate **80.** Therefore, there may therefore be provided for a machine with a structure **30** and the fixing means **90** without the plate **80.** Therefore, there may be provided for a system which comprises such machine and a stable support structure, such as a shelf, a shaped wall, a tubular girder which comprises anchoring portions for the means **90** of the machine. For example, such anchoring portions may have the same configuration as the portions **84** and the portions **89.**

The present invention may include various parts and/or similar or identical elements. Unless otherwise specified, similar or identical parts and/or elements will be indicated using a single reference number, it being clear that the described technical characteristics are common to all similar or identical parts and/or elements.

The invention is susceptible to numerous modifications and variants, all falling within the scope of protection of the attached claims. All details can be replaced by other technically equivalent elements, and the materials can be different depending on the needs, without departing from the scope of protection of the invention defined by the attached claims.

## Claims

1. A professional planetary mixer for processing a food product such as a cake dough or the like, the machine being designed to be positioned in an environment which comprises a base floor (**F**) and a wall (**P**), the machine comprising:
- a support structure (**30**);
- a container (**200**) designed to house the food product to be processed and a tool (**100**) designed to act on the food product to process it;
- drive means (**10**) and a motion transmission shaft (**11**) defining a first axis (**X**), said shaft (**11**) being designed to be operatively connected with said tool (**100**) to move it;
wherein said drive means (**10**) and said motion transmission shaft (**11**) are coupled with said support structure (**30**) so that the latter supports the first, said container (**200**) and said tool (**100**) being suitable to be operatively coupled with said support structure (**30**) so that the latter supports the former;
wherein said drive means (**10**) and said motion transmission shaft (**11**) are configured to promote the planetary motion of said tool (**100**) with respect to said first axis (**X**),
wherein said container (**200**) has a capacity at least equal to 5 litres;
wherein the machine comprises means (**90**) for allowing to fix said support structure (**30**) to the wall (**P**) so that, once fixed, the machine has a lower face (**51**) facing towards and spaced apart from the floor (**F**) and a rear face (**52**) facing towards the wall (**P**).

2. Machine according to claim 1, wherein said fixing means (**90**) are at said rear face (**52**), in use said first axis (**X**) having a distance from the wall (**P**) of at least 30 cm.

3. Machine according to claim 1 or 2 wherein the machine is a professional planetary mixer according to the UNI EN:454 standard.

4. Machine according to claim 1, 2 or 3, wherein said fixing means (**90**) are configured to allow the removable fixing of said support structure (**30**) to the wall (**P**).

5. Machine according to the preceding claim, wherein said removable fixing means (**90**) comprise a fixing plate (**80**) designed to be stably fixed to the wall (**P**), said support structure (**30**) being suitable to be removably fixed with said fixing plate (**80**).

6. Machine according to the preceding claim wherein the machine is a professional planetary mixer according to the UNI EN:454 standard.

7. Machine according to any one of the preceding claims, comprising means (**20**) for supporting and locking the container (**200**) during use, said means (**20**) comprising a pair of arms (**21**) designed to interact with said container (**200**) on opposite sides to prevent the lateral and vertical movement thereof.

8. Machine according to the preceding claim, wherein said arms (**21**) comprise an element with rectangular cross-section (**22**), said container (**200**) comprising on opposite sides a pair of seats (**210**) with rectangular cross-section, said element with rectangular cross-section (**22**) of said arms (**21**) being designed to be inserted into said pair of seats (**210**).

9. Machine according to any one of claims 5 to 8, wherein said support structure (**30**) comprises a pair of longitudinal bars (**42, 43**) defining respective second axes (**X'**), each bar (**42, 43**) comprising at least one pair of first and second operating surfaces (**47', 47**") that are spaced apart designed to abut against said fixing plate (**80**).

10. Machine according to the preceding claim, wherein said fixing plate (**80**) defines a second plane (**π4**) and it has an upper support portion (**84**) extending from said second plane (**π4**), said support structure (**30**) comprising a connection element (**44**) of said longitudinal bars (**42, 43**) extending along a third axis (**Z'**), said upper portion (**84**) supporting said connection element (**44**).

11. Machine according to the preceding claim, wherein said upper portion (**84**) comprises first through holes (**86**) and said connection element (**44**) comprising second holes (**46**), there being provided for screws (**86'**) passes through said first and second holes (8**6, 46**) for removably fixing said upper portion (**84**) and said connection element (**44**).

12. Machine according to claim 10 or 11, wherein said pair of longitudinal bars (**42, 43**) have a first end (**45'**) at said connection element (**44**) and a second opposite end (**45**), said second end (**45**) comprising a respective longitudinal slot (**49**) along the respective second axis (**X'**), said fixing plate (**80**) having a pair of first through holes (**89**), once said connection element (**44**) is at said support portion (**84**) of said fixing plate (**80**) said second end (**45**) extends from said support structure (**30**) so that said slot (**49**) is accessible by an operator.

13. Machine according to any one of claims 5 to 12, wherein said fixing plate (**80**) comprises a plurality of holes (**82**) for housing a plurality of fixing screws (**82'**) designed to interact with the wall (**P**), said bars (**42, 43**) having an abutment surface (**47**) which comprises said first and second operating surfaces (**47', 47"**), said abutment surface (**47**) having a plurality of holes (**48**) designed to remain at said holes (**82**) of said fixing plate (**80**) to at least partially house said fixing screws (**82'**) so as to allow said abutment surface (**47**) to abut against said fixing plate (**80**).

14. Machine according to any one of claims 5 to 13, wherein said fixing plate (**80**) has a horizontal notch (**88**), upon fixing the support structure (**30**) with said fixing plate (**80**) and upon mounting the container (**200**) for the food product to be processed, the latter having the edge at said notch (**88**).

15. Machine according to the preceding claim, comprising a pair of opposite lateral faces (**53, 54**) substantially perpendicular to said lower (**51**) and rear (**52**) faces, the machine comprising an internal chamber (**61**), said drive means (**10**) being arranged in said internal chamber (**61**), at least one of said opposite lateral faces (**53, 54**) or lower face (**51**) comprising an opening (**65**) defining an air intake for said drive means (**10**).
